# EUROPÄISCHE PATENTANMELDUNG

(11) **EP 4 796 436 A1**
(43) Veröffentlichungstag der Anmeldung: **26.08.2026**
(21) Anmeldenummer: 26151448.3
(22) Anmeldetag: 13.01.2026
(51) Int. Cl.: B64C 11/26, B23K 26/342, F04D 29/02

(54) **PROPELLERBLATT UND VERFAHREN ZUR REPARATUR EINES PROPELLERBLATTS**

(30) Priorität: 19.02.2025 DE 102025106139
(71) Anmelder: Röder Präzision GmbH, 63329 Egelsbach (DE)
(72) Erfinder: Erdmann, Jörg, 85591 Vaterstetten (DE)
(74) Vertreter: Keil & Schaafhausen Patentanwälte PartGmbB

(57) **Zusammenfassung**

Die Erfindung betrifft ein Propellerblatt für einen Flugzeugpropeller mit einem Flügelabschnitt (10) und einem mit diesem verbundenen Propellerblattfuß (20) sowie ein Verfahren zur Reparatur eines solchen Propellerblatts. Der Flügelabschnitt (10) kann einen Schaum- und/oder Wabenkern (11, 12, 13) mit einer Ummantelung (14) aus einem faserverstärkten Polymermaterial aufweisen. Der Propellerblattfuß (20) kann aus einem metallischen Werkstoff bestehen und einen sich in den Flügelabschnitt (10) erstreckenden und mit diesem verbundenen Schaft (21), wenigstens einen äußeren Lagerring (23) und einen Verstellzapfen (22) aufweisen. Es wird bevorzugt, wenn der Lagerring (23) eine Lauffläche aus einer auf den Lagerring (23) aufgeschweißten oder umgeschmolzenen Schicht (26) aus einem Stahl-Werkstoff besteht, der eine Dehngrenze Rp0,2 von über 750 N/mm² und eine Zugfestigkeit Rm von über 1.000 N/mm² aufweist. Der Lagerring (23) mit der Lauffläche kann eine Kern-Vickershärte HV10 von über 430 aufweisen.

## Beschreibung

Die Erfindung betrifft ein Propellerblatt für einen Flugzeugpropeller mit einem Flügelabschnitt und einem mit diesem verbundenen Propellerblattfuß und ein Verfahren zur Reparatur eines solchen Propellerblatts.

Propellerblätter werden häufig aus Faserverbundwerkstoffen mit Metalleinsätzen hergestellt, wobei der Flügelabschnitt häufig einen Schaumkern oder einen Wabenkern mit einer Ummantelung aus einem faserverstärkten Polymermaterial aufweist. Zur Anbindung des Propellerblatts an die Nabe eines Propellers dient der Propellerblattfuß, der meist aus einem metallischen Werkstoff besteht. Der Propellerblattfuß weist häufig einen sich in den Flügelabschnitt erstreckenden und mit diesem verbundenen Schaft und wenigstens einen Lagerring auf, mit dem der Propellerblattfuß in der Nabe gelagert ist. Meist sind Propellerblätter in der Nabe so drehbar gelagert, dass ihr Anstellwinkel verändert werden kann. Hierzu weist der Propellerblattfuß häufig einen Verstellzapfen auf, der mit einem Verstellantrieb zusammenwirkt. Derartige Propellerblätter sind aus der EP 0 610 273 B1 oder der FR 2 877 917 B1 bekannt.

Der Lagerring ist im Betrieb teilweise hohen mechanischen Belastungen ausgesetzt, so dass dieser insbesondere an seiner Lauffläche verschleißen kann. In der EP 3 431 388 B1 wird daher ein Propellerschaufelhalteelement vorgeschlagen, bei dem auf einen Körperabschnitt aus einem ersten korrosionsbeständigen Stahl, beispielsweise rostfreiem Stahl X12CrNiMoV12, ein Laufringabschnitt aus einem zweiten, anderen korrosionsbeständigen und induktionshärtbaren Stahl, beispielsweise X40CrMoV16-2 Edelstahl, durch Reibschweißen aufzubringen. Dieser Laufringabschnitt soll entweder bevor oder nachdem er an den Körperabschnitt geschweißt wurde, gehärtet werden. Dieses Verfahren eignet sich für die Neuherstellung eines Propellerblatts, indem an dem Propellerschaufelhalteelement ein Schaufelblattabschnitt befestigt wird.

Weiter wird in der EP 3 257 743 B1 vorgeschlagen, bei einer Propellerschaufel mit einer faserverstärkten Struktur einen Laufring aus einer Wolfram-Kobalt-Karbid-Legierung mit einer Härte von mehr als 45 Rc als Spray auf den Schaufelhalteabschnitt aufzutragen. Dieses Verfahren kann auch zu Reparaturzwecken eingesetzt werden.

Es besteht weiter Bedarf an einem Propellerblatt mit einem verbesserten Propellerblattfuß sowie der Möglichkeit, ein Propellerblatt zu reparieren. Aufgabe der Erfindung ist es daher, ein Propellerblatt mit einem besonders widerstandsfähigen Lagerring vorzuschlagen sowie ein Verfahren zur Reparatur eines Propellerblatts.

Diese Aufgabe wird mit einem Propellerblatt nach Anspruch 1 und einem Verfahren nach Anspruch 6 gelöst.

Ein erfindungsgemäßes Propellerblatt weist einen Flügelabschnitt aus einem Faserverbundmaterial und einen mit diesem verbundenen Propellerblattfuß auf. So kann der Flügelabschnitt einen Schaum- und/oder Wabenkern mit einer Ummantelung aus einem faserverstärkten Polymermaterial aufweisen und der Propellerblattfuß kann aus einem metallischen Werkstoff bestehen und einen sich in den Flügelabschnitt erstreckenden und mit diesem verbundenen Schaft, wenigstens einen äußeren Lagerring und einen Verstellzapfen aufweisen. Vorteilhafterweise ist der Lagerring mit einer Lauffläche aus einer auf den Lagerring aufgeschweißten oder umgeschmolzenen und ggf. gehärteten Schicht aus einem besonders widerstandsfähigen Stahl-Werkstoff versehen. Dieser kann eine Dehngrenze R_{p0,2} von über 750 N/mm², beispielsweise zwischen 750 N/mm² und 900 N/mm², insbesondere etwa 760 N/mm², aufweisen. Alternativ oder zusätzlich kann der Stahl-Werkstoff eine Zugfestigkeit Rₘ von über 1.000 N/mm², beispielsweise zwischen 1.100 N/mm² und 1.500 N/mm², insbesondere etwa 1.350 N/mm² bis 1.400 N/mm², aufweisen. Diese Materialeigenschaften können mit einigen schweißbaren, rostfreien Stählen der Luft- und Raumfahrt erreicht werden, die sich auch für eine anschließende Härtung eignen. Auf diese Weise lässt sich ein Propellerblatt mit einer verschleißfesten Lauffläche herstellen oder reparieren.

Für die Eignung der Schicht als Lauffläche für ein Kugel- oder Rollenlager hat es sich als vorteilhaft herausgestellt, wenn diese im Kern eine Vickershärte HV10 von über 400, beispielsweise zwischen 420 und 450, vorzugsweise etwa 430, aufweist. Die Kernhärte nach Vickers kann nach DIN EN ISO 6507-1:2024-1 mit einer Prüfkraft von 98,07 N (entspricht HV 10) bestimmt werden.

Neben der Kernhärte ist für die Lauffläche auch die erzielbare Randhärte eine wichtige Eigenschaft. Beispielsweise kann die Lauffläche eine Randschichthärtetiefe SHD 550 HV 1 von über 1,5 mm, beispielsweise von 1,6 mm bis 2,5 mm, insbesondere etwa 1,8 mm bis 2,0 mm, aufweisen. Die Randschichthärtungstiefe SHD kann nach DIN EN ISO 18203:2022-07 mit einer Prüfkraft von 9,807 N bestimmt werden.

In einem bevorzugte Beispiel kann die Lauffläche in einem Bereich von 0 mm bis 0,5 mm von der Oberfläche beabstandet eine Vickershärte HV10 von über 700 aufweisen, beispielsweise zwischen etwa 710 und 800.

Grundsätzlich müssen die Schicht der Lauffläche und der restliche Propellerblattfuß nicht aus identischen Materialien bestehen, solange diese ausreichend gut miteinander verschweißbar sind. Es kann jedoch vorteilhaft sein, wenn die Schicht der Lauffläche und der restliche Propellerblattfuß aus dem gleichen Material bestehen. Ein geeigneter rostfreier der Luft- und Raumfahrt Stahl kann beispielsweise neben Eisen (Fe) folgende Elemente enthalten: Kohlenstoff (C) zwischen 0,08 und 0,15 Gew-%, Mangan (Mn) zwischen 0,4 und 0,9 Gew-%, Silicium (Si) bis zu 0,5 Gew-%, Phosphor (P) bis 0,03 Gew-%, Schwefel (S) bis 0,025 Gew-%, Chrom (Cr) zwischen 11,0 und 12,5 Gew-%, Nickel (Ni) zwischen 2,0 und 3,0 Gew-%, Molybdän (Mo) zwischen 1,5 und 2,0 Gew-%, Vanadium (V) zwischen 0,25 und 0,4 Gew-% und Stickstoff (N) zwischen 0,02 und 0,04 Gew-%. Beispielsweise handelt es sich hierbei um rostfreien Stahl X12CrNiMoV12.

Ein erfindungsgemäßes Verfahren zur Reparatur eines Propellerblatts kann folgende Schritte aufweisen: Bereitstellen eines Propellerblatts mit einem Flügelabschnitt und mit einem metallischen Propellerblattfuß mit einem Lagerring, Auftragsschweißen einer Schicht aus einem rostfreien Stahl auf den Lagerring oder Umschmelzen einer Schicht des Lagerrings, spanende Bearbeitung der Schicht zur Ausbildung einer Laufflächengeometrie auf den Lagerring, ggf. Härten der Lauffläche, so dass diese eine Vickershärte HV10 von über 430 und eine Randschichthärtetiefe SHD 550 HV 1 von über 1,5 mm aufweist. Die spanende Bearbeitung kann dabei vor und/oder nach dem Härten erfolgen.

Die Besonderheit besteht bei dem erfindungsgemäßen Verfahren darin, dass die Schicht zur Ausbildung der Lauffläche aufgeschweißt wird, während der metallische Propellerblattfuß mit dem Flügelabschnitt, der einen Schaum- und/oder Wabenkern mit einer Ummantelung aus einem faserverstärkten Polymermaterial aufweist, verbunden ist. Es muss also nicht der Flügelabschnitt, der meist mit dem Propellerblattfuß verklebt und teilweise auch mechanisch verbunden ist, von dem Propellerblattfuß getrennt werden. Dies könnte zu Beschädigungen des Flügelabschnitts führen und wird daher vermieden. Andererseits wurde bisher eine Reparatur eines mit dem Flügelabschnitt verbundenen Propellerfußes unter Einsatz thermischer Verfahren vermieden, weil auch dies den Flügelabschnitt selbst oder seine Verbindung mit dem Propellerblattfuß schädigen könnte. Es hat sich herausgestellt, dass das Auftragsschweißen einer Schicht aus einem rostfreien Stahl, insbesondere eines Stahls wie X12CrNiMoV12-3 mit einer Dehngrenze R_{p0,2} von über 750 N/mm² und einer Zugfestigkeit Rₘ von über 900 N/mm², auf den Lagerring nicht zu einer Schädigung eines Flügelabschnitts aus einem Faserverbundmaterial führt.

Das Auftragsschweißen der Schicht aus einem rostfreien Stahl kann mittels Elektronenstrahlschweißen oder Laserstrahlschweißen mit zugeführtem Draht erfolgen, beispielsweise um durch Verschleiß auf der Lauffläche fehlendes Material zu ersetzen. Dabei kann zumindest der Laufring des Propellerblattfußes in einer Vakuumkammer einem Vakuum ausgesetzt werden, so dass Verunreinigungen aus dem Schweißbad entfernt werden können. Hierbei kann es notwendig sein, den Flügelabschnitt vor einem Unterdruck zu schützen, damit die im Schaum- oder Wabenkern eingeschlossenen Gase nicht die Faserverbundstruktur beschädigen. Für die Reparatur eines Propellerblatts kann es auch ausreichend sein, wenn die Lauffläche des Lagerrings nur umgeschmolzen wird, ohne dass Material aufgetragen wird. Dies ist insbesondere dann sinnvoll, wenn allenfalls sehr geringe Mengen des Materials der Lauffläche durch Verschleiß verlorengegangen sind.

Die Härtung der Lauffläche kann beispielweise mittels Induktionshärtung erfolgen, wodurch weniger Wärme in den Flügelabschnitt und seine Verbindung zum Propellerblattfuß eingetragen wird. Falls die Lauffläche und der Lagerring nach dem Auftragsschweißen bzw. nach dem Umschmelzen bereits eine ausreichende Härte, insbesondere in den oben für das Propellerblatt als bevorzug angegebenen Bereichen, aufweist, kann der Schritt der Härtung auch entfallen.

Zudem kann es vorteilhaft sein, Maßnahmen zur Wärmeableitung beim Auftragsschweißen und beim Induktionshärten zu ergreifen, um das Faserverbundmaterial und dessen Verbindung zum Propellerblattfuß vor zu hoher Temperatur zu schützen. So kann der Flügelabschnitt vor Wärmestrahlung abgeschirmt werden und/oder der Propellerblattfuß kann gekühlt werden.

Die Erfindung wird nachfolgend unter Bezugnahme auf die Zeichnung näher erläutert. Hierin zeigen schematisch:
- Figur 1: teilweise geschnitten ein erfindungsgemäßes Propellerblatt,
- Figur 2: ein Detail aus Figur 1, und
- Figur 3: eine Lageranordnung eines erfindungsgemäßen Propellerblatts.

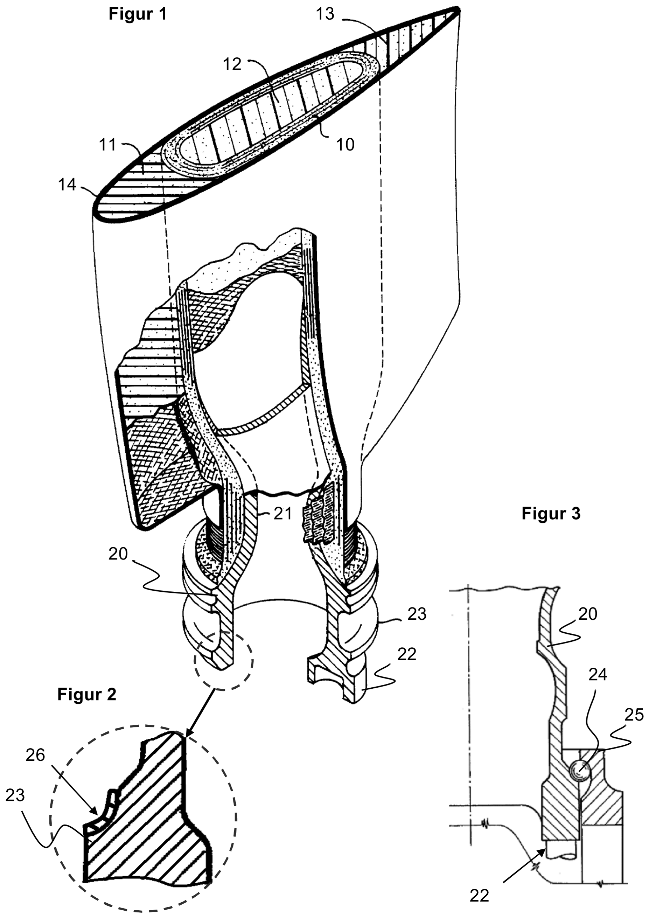

In Figur 1 ist beispielhaft ein vom grundsätzlichen Aufbau an sich bekanntes Propellerblatt dargestellt, das im Wesentlichen aus einem Flügelabschnitt 10 und einem mit diesem verbundenen Propellerblattfuß 20 besteht.

Der Flügelabschnitt 10 weist in dem dargestellten Beispiel einen Kern aus mehreren Schaumelementen 11, 12, 13 auf, die mit einer Ummantelung 14 aus einem faserverstärkten Polymermaterial versehen sind. Die Erfindung ist nicht auf den exemplarisch gezeigten Aufbau des Flügelabschnitts 10 mit mehreren Kernelementen beschränkt.

Zur Anbindung an die Nabe eines Propellers ist das Propellerblatt mit dem metallischen Propellerblattfuß 20 versehen. Der Propellerblattfuß 20 weist einen sich in den Flügelabschnitt 10 hinein erstreckenden Schaft 21 auf, der mit dem Flügelabschnitt 10 fest verbunden ist, beispielsweise mittels einer Verklebung. In den Figuren 1 und 3 ist an dem Propellerblattfuß 20 ein Verstellzapfen 22 angedeutet, der mit einem Verstellantrieb (nicht gezeigt) Zusammenwirken kann, um den Anstellwinkel des Propellerblatts zu verändern. Hierzu ist der Propellerblattfuß 20 mittels einer in Figur 3 angedeuteten Lageranordnung in der Nabe drehbar gelagert. Diese Lageranordnung weißt im Wesentlichen einen äußeren Lagerring 23 des Propellerblattfußes 20, mehrere ggf. in einem Käfig (nicht dargestellt) geführte Kugeln 24 und einen Lagerring 25 der Nabe auf.

An der durch die Lageranordnung gebildeten Verbindungsstelle zwischen Propellernabe (Hub) und Propellerblattfuß 20 verschleißt am Propellerblattfuß 20 die Lauffläche des Lagerrings 23, bei häufiger Propellerverstellung. Der Verschleiß kann eine Kombination aus abrasivem Verschleiß und plastischer Verformung sein. Propellerblätter werden bei Überschreitung von Verschleiß-Grenzwerten außer Betrieb genommen und müssen ersetzt oder repariert werden.

Letzteres kann nach der Erfindung durch ein Reparaturverfahren erfolgen, indem durch Auftragsschweißen, beispielsweise mit Elektronenstrahl und Draht (sogenanntes EB Welding), fehlendes Material der Lauffläche des Lagerrings 23 ersetzt wird, wodurch auf den Lagerring 23 eine Schicht 26 aufgebracht wird. Es kann erfindungsgemäß eine Schicht, die aus rostfreiem Stahl X12CrNiMoV12 besteht, aufgetragen werden, während der Flügelabschnitt 10 mit dem Propellerblattfuß 20 verbundenen bleibt. Das Propellerblatt kann beim Auftragsschweißen einem Vakuum ausgesetzt werden, wobei ggf. Schutzmaßnahmen ergriffen werden, um das Faserverbundteil des Propellerblatts, d.h. den Flügelabschnitt 10, vor Vakuum zu schützen.

Durch Induktionshärten der bearbeiteten Stellen am Propellerblattfuß 20 wird im Lagerring 23 und der aufgeschweißten Schicht 26 mit der Lauffläche eine Kern-Vickershärte HV10 von über 430, eine Randschichthärtetiefe SHD 550 HV 1 von über 1,5 mm und eine Vickershärte HV10 von über 700 in einem Abstand von 0,5 mm von der Oberfläche der Lauffläche erreicht.

Das Wiederherstellen der ursprünglichen Geometrie des Propellerblattfußes kann mittels spanender Bearbeitung, z.B. mittels Drehen, vor und/oder nach dem Härten erreicht werden.

Zudem können Maßnahmen zur Wärmeableitung beim Auftragsschweißen und Induktionshärten ergriffen werden, um den Faserverbundteil des Propellerblatts, d.h. den Flügelabschnitt 10, sowie die Verbindung zum Propellerblattfuß 20 vor zu hoher Temperatur zu schützen.

### Bezugszeichen :

- 10: Flügelabschnitt
- 11: Schaumelement
- 12: Schaumelement
- 13: Schaumelement
- 14: Ummantelung aus faserverstärktem Polymermaterial
- 20: Propellerblattfuß
- 21: Schaft
- 22: Verstellzapfen
- 23: Lagerring
- 24: Kugel
- 25: Lagerring der Nabe
- 26: aufgeschweißte Schicht

## Patentansprüche

1. Propellerblatt mit einem Flügelabschnitt (10) und einem mit diesem verbundenen Propellerblattfuß (20),
wobei der Flügelabschnitt (10) einen Schaum- und/oder Wabenkern (11, 12, 13) mit einer Ummantelung (14) aus einem faserverstärkten Polymermaterial aufweist,
und wobei der Propellerblattfuß (20) aus einem metallischen Werkstoff besteht und einen sich in den Flügelabschnitt (10) erstreckenden und mit diesem verbundenen Schaft (21), wenigstens einen äußeren Lagerring (23) und einen Verstellzapfen (22) aufweist,
**dadurch gekennzeichnet, dass** der Lagerring (23) eine Lauffläche aus einer auf den Lagerring (23) aufgeschweißten oder umgeschmolzenen Schicht (26) aus einem Stahl-Werkstoff besteht, der eine Dehngrenze R_{p0,2} von über 750 N/mm² und eine Zugfestigkeit Rₘ von über 1.000 N/mm² aufweist, und dass der Lagerring (23) mit der Lauffläche eine Kern-Vickershärte HV10 von über 430 aufweist.

2. Propellerblatt nach Anspruch 1, **dadurch gekennzeichnet, dass** die Lauffläche eine Randschichthärtetiefe SHD 550 HV 1 von über 1,5 mm aufweist.

3. Propellerblatt nach Anspruch 1 oder 2, **dadurch gekennzeichnet, dass** die Lauffläche eine Vickershärte HV10 von über 700 aufweist in einem Abstand von 0,5 mm von der Oberfläche aufweist.

4. Propellerblatt nach einem der vorhergehenden Ansprüche, **dadurch gekennzeichnet, dass** die Lauffläche aus einem Stahl-Werkstoff besteht, der eine Zugfestigkeit Rₘ von über 1.300 N/mm² und eine Vickershärte HV10 von über 435 aufweist.

5. Propellerblatt nach einem der vorhergehenden Ansprüche, **dadurch gekennzeichnet, dass** die Lauffläche aus einer auf den Lagerring (23) aufgeschweißten und gehärteten Schicht aus rostfreiem Stahl X12CrNiMoV12 besteht.

6. Verfahren zur Reparatur eines Propellerblatts mit folgenden Schritten:
a. Bereitstellen eines Propellerblatts mit einem Flügelabschnitt (10) und einem Propellerblattfuß (20), wobei der Flügelabschnitt (10) einen Schaum- und/oder Wabenkern (11, 12, 13) mit einer Ummantelung (14) aus einem faserverstärkten Polymermaterial aufweist und wobei der Propellerblattfuß (20) aus einem metallischen Werkstoff besteht und einen sich in den Flügelabschnitt (10) erstreckenden und mit diesem verbundenen Schaft (21), wenigstens einen äußeren Lagerring (23) und einen Verstellzapfen (22) aufweist
b. Auftragsschweißen einer Schicht aus einem rostfreien Stahl, der eine Dehngrenze R_{p0,2} von über 750 N/mm² und eine Zugfestigkeit Rₘ von über 900 N/mm² aufweist, auf den Lagerring (23) oder Umschmelzen einer Schicht des Lagerrings (23),
c. spanende Bearbeitung der Schicht zur Ausbildung einer Laufflächengeometrie auf den Lagerring (23),
d. optional Härten der Lauffläche, so dass diese eine Vickershärte HV10 von über 430 und eine Randschichthärtetiefe SHD 550 HV 1 von über 1,5 mm aufweist.

7. Verfahren nach Anspruch 6, **dadurch gekennzeichnet, dass** Schritt b. mittels Elektronenstrahlschweißen oder Laserstrahlschweißen erfolgt.

8. Verfahren nach Anspruch 7, **dadurch gekennzeichnet, dass** in Schritt b. zumindest der Laufring (23) des Propellerblattfußes (20) einem Vakuum ausgesetzt wird.

9. Verfahren nach einem der Ansprüche 6 bis 8, **dadurch gekennzeichnet, dass** Schritt d. mittels Induktionshärtung erfolgt.

10. Verfahren nach einem der Ansprüche 6 bis 9, **dadurch gekennzeichnet, dass** in Schritt b. und/oder in Schritt d. der Flügelabschnitt (10) vor Wärmestrahlung geschützt wird und/oder der Propellerblattfuß (20) gekühlt wird.
